# EUROPÄISCHE PATENTSCHRIFT

(11) **EP 3 482 574 B1**
(45) Veröffentlichungstag und Bekanntmachung des Hinweises auf die Patenterteilung: **28.08.2019**
(21) Anmeldenummer: 17787905.3
(22) Anmeldetag: 13.10.2017
(51) Int. Cl.: H04W 4/44, H04W 4/02, H04W 64/00, H04L 29/08, G08G 1/00, G07C 5/00, H04W 4/70

(54) **BEREITSTELLEN EINER INFORMATION AUS EINEM VERBUND MEHRERER KRAFTFAHRZEUGE**
PROVIDE INFORMATION FROM WITHIN A GROUP OF MOTOR VEHICLES
FOURNIR INFORMATION DEPUIS UN GROUPE DE VÉHICULES AUTOMOBILES

(30) Priorität: 03.11.2016 DE 102016221557
(43) Veröffentlichungstag der Anmeldung: 15.05.2019
(73) Patentinhaber: Audi AG, 85045 Ingolstadt (DE)
(72) Erfinder: BRUNS, Erich, 85053 Ingolstadt (DE)
(86) Internationale Anmeldenummer: PCT/EP2017/076159
(87) Internationale Veröffentlichungsnummer: WO 2018/082900

(56) Entgegenhaltungen:
- JP-A- 2014 164 316
- US-A1- 2011 095 908
- US-A1- 2016 057 335
- US-A1- 2016 124 976
- TALASILA MANOOP ET AL: "Crowdsensing in the Wild with Aliens and Micropayments", IEEE PERVASIVE COMPUTING, IEEE SERVICE CENTER, LOS ALAMITOS, CA, US, Bd. 15, Nr. 1, 1. Januar 2016 (2016-01-01) , Seiten 68-77, XP011596965, ISSN: 1536-1268, DOI: 10.1109/MPRV.2016.18 [gefunden am 2016-01-21]

## Beschreibung

Die Erfindung betrifft ein Verfahren, um einer anfragenden Einheit (Anfrageeinheit) eine Information mittels eines Kraftfahrzeugs bereitzustellen. Ein zweiter Aspekt der Erfindung betrifft eine Steuerungszentrale, über welche auf eine Anfrage hin eine Information mittels eines Kraftfahrzeugs bereitgestellt werden kann.

Gemäß dem Stand der Technik sind Fahrzeuge mit einer Vielzahl von Sensoren ausgestattet, um ihre Umgebung zu erfassen. Hierzu gehören beispielsweise Temperaturfühler, Höhenstandsensoren am Fahrwerk, Kameras, Radarsensoren und/oder die GPS-Sensoren. Die Daten, die diese Sensoren generieren, dienen der Bereitstellung von Fahrzeugfunktionen, wie beispielsweise Spurhalteassistent, Staupilot oder Navigationssystem. Die generierten Daten befinden sich nur lokal im Fahrzeug, insbesondere ist eine Nutzung der Daten durch Dritte nicht vorgesehen.

Die DE 102 04 677 A1 stellt ein System zur Fahrerunterstützung in einem Kraftfahrzeug zur Verfügung, welches Verkehrsdaten durch fahrzeugseitige Sensoren erfasst und diese Daten als Dienstleistung anderen Fahrzeugen zur Verfügung stellt. Die Erfassung und/oder Ermittlung der Daten kann dann in Abhängigkeit der Fahrerunterstützungssysteme der anderen Fahrzeuge erfolgen. Für die Bereitstellung der Daten kann ein Vergütungsmodell vorgesehen sein. Die Bereitstellung des Daten ist regional durch die funktechnische Erreichbarkeit der anderen Fahrzeuge begrenzt. Beispielsweise ist es für einen Wetterdienst nicht möglich, von Deutschland aus eine Wetterinformation aus Sizilien zu ermitteln.

Die DE 10 2015 001 194 A1 betrifft das Zuweisen einer Information von zumindest einem Kraftfahrzeug zu zumindest einem ersten Objekttyp und einem zweiten Objekttyp einer Klassifikationseinrichtung. Die Klassifikationseinrichtung ist als externer Server mit einer Datenbank ausgebildet.

Die DE 10 2014 224 481 A1 betrifft die Fernsteuerung von Funktionalitäten eines Fahrzeugs mittels eines mobilen Endgeräts. Durch das mobile Endgerät können in einem zuvor über das Fahrzeugverwaltungssystem ausgewählten Fahrzeug bestimmte Funktionalitäten des Fahrzeugs angesteuert werden. Dabei erfolgt eine Identifizierung des mobilen Endgeräts gegenüber dem Fahrzeug anhand eines Austauschs von Kennungen, die zuvor sowohl das Fahrzeug als auch das Endgerät erhalten haben.

Die DE 10 2014 225 593 A1 offenbart ein Rechenverfahren, wobei ein kraftfahrzeugexterner Server einem kraftfahrzeuginternen Computer eine zu lösende Aufgabe übermittelt. Die zu lösende Aufgabe kann von dem Server auf die kraftfahrzeuginternen Computer mehrerer Kraftfahrzeuge aufgeteilt werden, wobei eine Rechenzeit für das Lösen der Aufgabe vergütet wird.

Die DE 10 2012 208 256 A1 beschreibt ein Verfahren zum autonomen Nachführen eines Folgefahrzeugs auf der Spur eines Leitfahrzeugs, wobei das Leitfahrzeug von einem Fahrer gesteuert wird und dem Folgefahrzeug eine Folgebotschaft mittels Fahrzeug-zu-X-Kommunikation übermittelt.

Die US 2016 / 01 24 976 A1 beschreibt ein öffentliches Sensorsystem mit einer zentralen Einheit und entfernten Einheiten. Die entfernten Einheiten empfangen Anfragen von der zentralen Einheit und übermitteln Daten an die zentrale Einheit in Erwiderung auf die Anfrage. Informationen wie Verkehr und Wetterbedingungen werden der zentralen Einheit durch die entfernten Einheiten bereitgestellt, wenn nachgefragt.

Es ist Aufgabe der vorliegenden Erfindung, Sensordaten, die in einem Kraftfahrzeug erfasst werden, einem fahrzeugexternen Nutzen zuzuführen.

Diese Aufgabe wird erfindungsgemäß gelöst durch die Gegenstände der unabhängigen Patentansprüche. Vorteilhafte Ausgestaltungen mit zweckmäßigen Weiterbildungen sind Gegenstand der Unteransprüche, der Beschreibung sowie der Figuren.

Ein erster Aspekt der Erfindung betrifft ein Verfahren zum Bereitstellen einer Information mittels eines Kraftfahrzeugs. Um die Sensordaten des Kraftfahrzeugs einem fahrzeugexternen Nutzen zuzuführen, liegt der Erfindung die Idee zugrunde, dass eine Steuerungszentrale ein bestimmtes Kraftfahrzeug aus einer Vielzahl von Kraftfahrzeugen zum Erfassen einer Information auswählt. Die Steuerungszentrale kann insbesondere einen Server und/oder eine Datenbank umfassen. Im Allgemeinen wird zunächst eine Informationsanfrage durch die Steuerungszentrale aus einer Anfrageeinheit empfangen. Die Anfrageeinheit ist beispielsweise eine Eingabevorrichtung, insbesondere der Steuerungszentrale, ein von der Steuerungszentrale entfernter weiterer Server, ein Personalcomputer oder ein mobiles Endgerät. Die Informationsanfrage kann mittels einer Datenverbindung, insbesondere über das Internet, eine Funkverbindung, oder eine drahtgestützte Verbindung, empfangen werden. Durch die Steuerungszentrale kann insbesondere eine von der Anfrageeinheit automatisch gestellte oder eine über die Anfrageeinheit von einem Nutzer gestellte Informationsanfrage empfangen werden. Als Informationsanfrage ist eine Anfrage der Anfrageeinheit zum Bereitstellen der Information zu verstehen.

Eine Position des Kraftfahrzeugs wird kontinuierlich, periodisch und/oder auf eine Positionsanfrage der Steuerungszentrale hin durch die Steuerungszentrale empfangen. Auf diese Weise ist der Steuerungszentrale stets die Position des Kraftfahrzeugs bekannt. Insbesondere kann, wie oben beschrieben, die Position des Kraftfahrzeugs durch das vorbestimmte Auswahlkriterium zum Auswählen des Kraftfahrzeugs aus der Vielzahl von Kraftfahrzeugen herangezogen werden. Für die Vielzahl von Kraftfahrzeugen wird analog eine jeweilige Position der Kraftfahrzeuge kontinuierlich, periodisch und/oder auf eine Positionsanfrage der Steuerungszentrale hin durch die Steuerungszentrale empfangen.

Aus einer Vielzahl von Kraftfahrzeugen wird, insbesondere durch die Steuerungszentrale, nach einem vorbestimmten Auswahlkriterium das Kraftfahrzeug zum Bereitstellen der Information ausgewählt, wobei das Auswahlkriterium umfasst, dass das Kraftfahrzeug aufgrund der Position des Kraftfahrzeugs ausgewählt wird. Insbesondere erfolgt das Auswählen des Kraftfahrzeugs zumindest teilweise anhand der Art der angefragten Information. Durch die Steuerungszentrale wird ein Steuersignal zum Steuern einer Erfassungseinrichtung des ausgewählten Kraftfahrzeugs an das ausgewählte Kraftfahrzeug ausgesendet. Beispielsweise umfasst das Steuersignal einen Befehl zum Erfassen der Information durch die Erfassungseinrichtung und/oder einen Befehl zum Senden der erfassten Information an die Steuerungszentrale. Die Erfassungseinrichtung des ausgewählten Kraftfahrzeugs kann in Reaktion auf das Steuersignal die Information erfassen. Beispielsweise können Sensordaten als Information erfasst werden. Insbesondere wird ein Sensorsignal der Erfassungseinrichtung als Information erfasst. Die Steuerungszentrale empfängt die aufgrund des Steuersignals erfasste Information aus der Erfassungseinrichtung des ausgewählten Kraftfahrzeugs. Insbesondere wird die erfasste Information durch die Steuerungszentrale durch Empfangen eines durch das Kraftfahrzeug gesendeten Informationssignals von der Steuerungszentrale ermittelt. Das Informationssignal kann durch eine Kommunikationseinheit des ausgewählten Kraftfahrzeugs an die Steuerungszentrale gesendet werden. Die Information wird durch die Steuerungszentrale für die Anfrageeinheit bereitgestellt. Insbesondere wird die Information durch die Steuerungszentrale an die Anfrageeinheit übermittelt oder gesendet. Vorzugsweise wird die Information durch die Steuerungszentrale für die Anfrageeinheit über dieselbe Datenverbindung bereitgestellt, über welche auch die Informationsanfrage empfangen wird. Beispielsweise kann durch das vorliegende Verfahren eine Wetterinformation für Sizilien durch einen Wetterdienst aus Deutschland als Anfrageeinheit angefragt werden. Die Wetterinformation kann dann aus einem Kraftfahrzeug, das sich in Sizilien befindet, erfasst und dem Wetterdienst bereitgestellt werden.

Das Aussenden des Steuersignals an das ausgewählte Kraftfahrzeug und/oder das Empfangen der Information aus der Erfassungseinrichtung durch die Steuerungszentrale kann über eine Datenverbindung, insbesondere eine Funkverbindung, beispielsweise über das Mobilfunknetz, über Wi-Fi oder über Bluetooth, erfolgen. Insbesondere ist das Kraftfahrzeug, beispielsweise mit einem Fahrzeugkonto, bei der Steuerungszentrale registriert. Vorzugsweise ist die Anfrageeinheit und/oder ein Nutzer der Anfrageeinheit, beispielsweise mit einem Nutzerkonto, bei der Steuerungszentrale registriert.

In einer Weiterbildung der Erfindung umfasst das Auswahlkriterium, dass das Kraftfahrzeug aufgrund einer Zustimmung eines Fahrzeughalters des Kraftfahrzeugs zum Bereitstellen der Information und/oder aufgrund des Vorhandenseins einer mit der Information in Bezug stehenden Einrichtung in und/oder an dem Kraftfahrzeug ausgewählt wird. Beispielsweise steht die Information in Bezug zu einer geographischen Position. In diesem Fall kann als das vorbestimmte Auswahlkriterium das Kraftfahrzeug aus der Vielzahl von Kraftfahrzeugen ausgewählt werden, dessen Position die geringste Abweichung von der geographischen Position der gewünschten Information aufweist. Alternativ oder zusätzlich kann das vorbestimmte Auswahlkriterium umfassen, dass bevorzugt das Kraftfahrzeug aus der Vielzahl von Kraftfahrzeugen ausgewählt wird, dessen Fahrzeughalter eine grundsätzliche Zustimmung zum Bereitstellen der Information gegeben hat. In diesem Fall ist ein besonders schnelles Ermitteln und Bereitstellen der Information möglich, da die Zustimmung des Fahrzeughalters des Kraftfahrzeugs bereits vorliegt. Das vorbestimmte Auswahlkriterium kann außerdem umfassen, dass das Kraftfahrzeug aus der Vielzahl von Kraftfahrzeugen aufgrund des Vorhandenseins einer mit der Information in Bezug stehenden Einrichtung in und/oder an dem Kraftfahrzeug ausgewählt wird. Beispielsweise wird das Kraftfahrzeug zum Bereitstellen der Information ausgewählt, welches eine passende Erfassungseinrichtung zum Erfassen der Information aufweist. Insbesondere können hierzu an dem Kraftfahrzeug vorhandene Erfassungseinrichtungen in dem Fahrzeugkonto angegeben sein.

In weiterer Ausgestaltung der Erfindung wird beim Bereitstellen der Information ein mit dem Kraftfahrzeug in Bezug stehender Zähler der Steuerungszentrale um einen vordefinierten Wert verändert. Insbesondere ist der Zähler mit dem Fahrzeugkonto verknüpft. Es kann ein zweiter Zähler vorgesehen sein, der mit der Anfrageeinheit beziehungsweise dem Nutzerkonto verknüpft ist. Insbesondere werden sowohl der Zähler als auch der zweite Zähler gleichzeitig, vorzugsweise gegenläufig, um den vordefinierten Wert verändert. Beispielsweise wird der Zähler um den vordefinierten Wert erhöht, wenn der zweite Zähler um den vordefinierten Wert verringert wird. Auf diese Weise kann ein Vergütungssystem bereitgestellt werden, welches den Fahrzeughalter des Kraftfahrzeugs für das Ermitteln der Information vergütet. Alternativ oder zusätzlich kann auch eine Vergütung eines Betreibers der Steuerungszentrale vorgesehen sein. Der Steuerungszentrale kann in diesem Fall ein dritter Zähler zugeordnet sein.

Eine Weiterbildung der Erfindung sieht vor, dass mit dem Anfragen und/oder dem Bereitstellen der Information eine Buchungseinrichtung der Anfrageeinheit mit einer Buchungseinrichtung des Kraftfahrzeugs für einen Vergütungsvorgang gekoppelt wird. Beispielsweise handelt es sich bei der Buchungseinrichtung der Anfrageeinheit und/oder der Buchungseinrichtung des Kraftfahrzeugs um ein Guthabenkonto, welches insbesondere bei einem Zahlungsdienstleister geführt wird. Beispielsweise handelt es sich dabei um ein PayPal-Konto, ein Bitcoin-Konto, ein sogenanntes Bitcoin-Wallet, oder ein Konto einer anderen Kryptowährung. Vorzugsweise wird zusätzlich oder stattdessen eine Buchungseinrichtung der Steuerungszentrale mit der Buchungseinrichtung der Anfrageeinheit für einen Vergütungsvorgang gekoppelt. Durch das Koppeln der jeweiligen Buchungseinrichtungen ist eine Vergütung der Steuerungszentrale und/oder des Fahrzeughalters des Kraftfahrzeugs ermöglicht. In weiterer Ausgestaltung der Erfindung wird durch das Steuersignal zumindest ein Sensor der Erfassungseinrichtung des Kraftfahrzeugs zum Erfassen der Information gesteuert. Als Information kann insbesondere ein Sensorsignal des Sensors der Erfassungseinrichtung erfasst werden.

Eine Ausgestaltungsform der Erfindung sieht vor, dass als die Information Umweltdaten, Verkehrsdaten und/oder Routendaten erfasst werden. Die Umweltdaten können beispielsweise eine Messgröße einer Umgebung des Kraftfahrzeugs, beispielsweise eine Temperatur und/oder eine Niederschlagsmenge, und/oder ein Aufnahmesignal der Umgebung des Kraftfahrzeugs, beispielsweise ein Bildsignal, Radarsignal oder ein Tonsignal, umfassen. Die Verkehrsdaten können einen Messwert, beispielsweise eine gefahrene Geschwindigkeit oder eine gemessene Verkehrsdichte, und/oder eine Aufnahme einer Verkehrssituation, beispielsweise ein Bildsignal oder Radarsignal der Verkehrssituation, umfassen. Die Routendaten können beispielsweise einen Standort, eine gefahrene Route und/oder eine geplante Route des Kraftfahrzeugs umfassen.

Eine Weiterbildung der Erfindung sieht vor, dass durch das Steuersignal der Fahrzeughalter nach seinem Einverständnis zum Erfassen und/oder Übertragen der Information gefragt wird. Somit kann der Fahrzeughalter bei jedem Erfassen und/oder Übertragen der Information sein Einverständnis zum Erfassen und/oder Übertragen der Information geben oder verweigern.

Ein zweiter Aspekt der Erfindung betrifft eine Steuerungszentrale zum Bereitstellen einer Information eines Kraftfahrzeugs. Die Steuerungszentrale weist einen ersten Kommunikationsteil zum Empfangen einer Informationsanfrage aus einer Anfrageeinheit und zum Bereitstellen der Information für die Anfrageeinheit auf. Insbesondere ist der erste Kommunikationsteil dazu ausgebildet, mit der Anfrageeinheit zu kommunizieren. Die Steuerungszentrale umfasst außerdem einen Rechenteil zum Auswählen des Kraftfahrzeugs zum Bereitstellen der Information aus einer Vielzahl von Kraftfahrzeugen nach einem vorbestimmten Auswahlkriterium, wobei das Auswahlkriterium umfasst, dass das Kraftfahrzeug aufgrund einer Position des Kraftfahrzeugs ausgewählt wird. Insbesondere ist der Rechenteil dazu ausgebildet, das Kraftfahrzeug abhängig von der Informationsanfrage auszuwählen. Die Steuerungszentrale umfasst einen zweiten Kommunikationsteil zum Aussenden eines Steuersignals zum Steuern einer Erfassungseinrichtung des ausgewählten Kraftfahrzeugs an das ausgewählte Kraftfahrzeug und zum Ermitteln der aufgrund des Steuersignals erfassten Information aus der Erfassungseinrichtung des ausgewählten Kraftfahrzeugs. Insbesondere ist der zweite Kommunikationsteil zur Kommunikation mit dem ausgewählten Kraftfahrzeugs ausgebildet. Die Steuerungszentrale ist dazu ausgebildet, für die Vielzahl von Kraftfahrzeugen eine jeweilige Position der Kraftfahrzeuge kontinuierlich, periodisch und/oder auf eine Positionsanfrage der Steuerungszentrale hin zu empfangen.

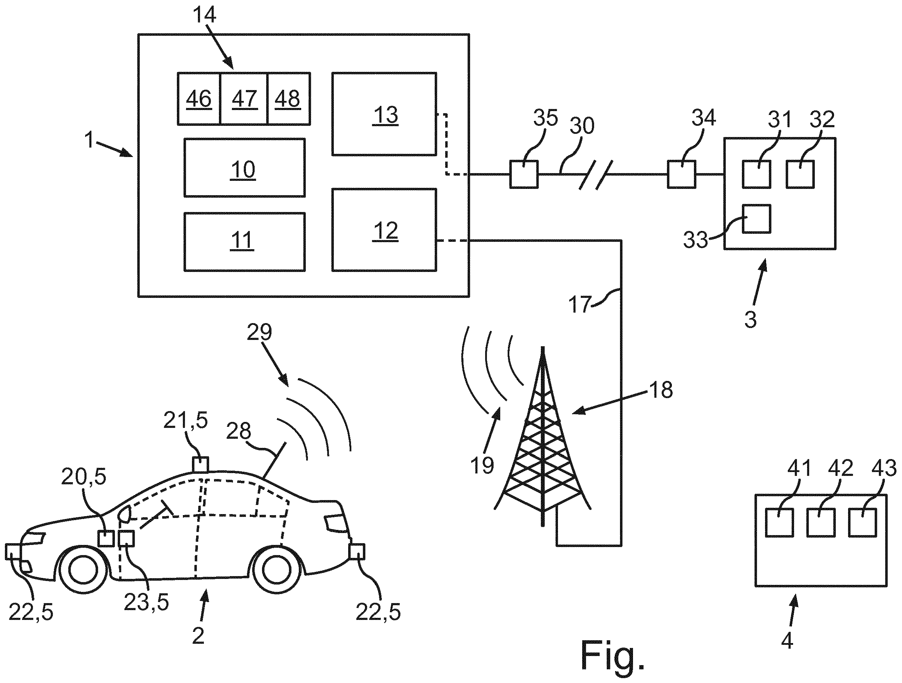

Im Folgenden ist ein Ausführungsbeispiel der Erfindung beschrieben. Hierzu zeigt die einzige Figur (Fig.) eine schematische Ansicht eines Kraftfahrzeugs, einer Steuerungszentrale und einer Anfrageeinheit.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die einzige Figur zeigt schematisch eine Steuerungszentrale 1. Die Steuerungszentrale 1 ist vorliegend mittels einer Datenverbindung 30 mit einer Anfrageeinheit 3 verbunden. Über die Datenverbindung 30 wird eine Informationsanfrage 34 von der Anfrageeinheit 3 an die Steuerungszentrale 1 gesendet. Durch die Informationsanfrage 34 kann eine Information 35 angefragt werden. Die Steuerungszentrale 1 empfängt die Informationsanfrage 34, erfasst die Information mittels eines Kraftfahrzeugs 2 und stellt die Information 35 für die Anfrageeinheit 3 bereit.

Beispielsweise möchte ein deutscher Wetterdienst prüfen, ob ein Temperaturfühler einer Wetterstation auf Sizilien einwandfrei arbeitet. Hierfür benötigt der Wetterdienst einen Vergleichswert. Anstatt einen Techniker nach Sizilien zu entsenden, kann mittels der Anfrageeinheit 3, beispielsweise ein Computer oder Server des Wetterdienstes, eine Anfrage an die Steuerungseinrichtung 1 gesendet werden, mit der Informationsanfrage 34 nach einem aktuellen Temperaturwert an einer Geoposition der Wetterstation. Die Steuerungseinrichtung 1 erkennt beispielsweise, dass sich das Kraftfahrzeug 2 gerade ungefähr an der Geoposition der Wetterstation befindet beziehungsweise dass eine Position des Kraftfahrzeugs 2 in etwa der Geoposition der Wetterstation entspricht. Ein Fahrzeughalter des Kraftfahrzeugs 2 kann mittels des Steuersignals angefragt werden, ob er die Information 35 für die Informationsanfrage 34 erfassen und bereitstellen möchte. Alternativ kann der Fahrzeughalter diese Zustimmung bereits in der Vergangenheit gegeben haben. Durch die Zustimmung des Fahrzeughalters kann die aktuelle Temperatur durch die Erfassungseinrichtung 5 des Kraftfahrzeugs 2 erfasst werden und durch die Kommunikationseinrichtung 28 an die Steuerungszentrale 1 gesendet werden. Die Steuerungszentrale 1 stellt die Information 35 der Anfrageeinheit 3 zur Verfügung. In diesem Fall ist die Anfrageeinheit 3 insbesondere ein Computer, ein Telefon oder ein Server des Wetterdienstes. Für das Bereitstellen der Information 35 können der Fahrzeughalter des Kraftfahrzeugs 2 sowie der Betreiber der Steuerungseinrichtung 1 vergütet werden. Im Falle besonders kleiner Vergütungsbeträge sind klassische Bezahlsysteme nicht rentabel, weshalb die Vergütung mittels einer digitalen Währung, beispielsweise einer Kryptowährung, abgewickelt werden kann.

Die Anfrageeinheit 3 kann eine Eingabevorrichtung 31, eine Recheneinheit 32 und/oder eine Datenbank 33 umfassen. Die Anfrageeinheit 3 kann als Computer, insbesondere Personalcomputer, oder als Server ausgebildet sein. Die Informationsanfrage 34 kann über die Anfrageeinheit 3 durch die Eingabevorrichtung 31 an die Steuerungszentrale 1 gesendet werden. Alternativ oder zusätzlich kann die Anfrageeinheit 3 zum automatischen Senden der Informationsanfrage 34, beispielsweise abhängig von einer Berechnung in der Recheneinheit 32 und/oder einem Datenwert in der Datenbank 33, ausgebildet sein.

Die Informationsanfrage 34 kann ein Datenpaket darstellen oder umfassen. Insbesondere wird die Informationsanfrage 34 mittels eines Datensignals übermittelt. Die Informationsanfrage 34 kann insbesondere eine Information 35 beschreiben, die durch das Kraftfahrzeug 2 beziehungsweise die Steuerungszentrale 1 bereitgestellt werden soll. Die Informationsanfrage 34 kann Kontoinformationen zu einem Nutzerkonto der Anfrageeinheit 3 beziehungsweise eines Nutzers der Anfrageeinheit 3 umfassen. Die Informationsanfrage 34 wird insbesondere von einem ersten Kommunikationsteil 13 der Steuerungszentrale 1 empfangen. Der erste Kommunikationsteil 13 kann eine Schnittstelle zum Interagieren mit der Datenverbindung 30, eine Sendeeinheit und/oder eine Empfangseinheit aufweisen.

Die Steuerungszentrale 1 umfasst weiterhin einen Rechenteil 11. Durch den Rechenteil 11 kann das Kraftfahrzeug 2 aus einer Vielzahl von Kraftfahrzeugen zum Bereitstellen der Information 35 ausgewählt werden. Insbesondere wird das Kraftfahrzeug 2 nach einem vorbestimmten Auswahlkriterium ausgewählt. Zum Auswählen des Kraftfahrzeugs 2 aus der Vielzahl von Kraftfahrzeugen kann dem Rechenteil ein Speicherteil 10, insbesondere ein Speichermedium, beispielsweise eine Festplatte, ein Flash Speicher oder ein Arbeitsspeicher, zugeordnet seien. Auf dem Speicherteil 10 ist insbesondere eine Datenbank, die vorzugsweise Daten über die Vielzahl von Kraftfahrzeugen umfasst, gespeichert. Beispielsweise sind in der Datenbank ein jeweiliger Standort, das Vorhandensein einer Einrichtung, insbesondere Erfassungseinrichtung 5, die mit der Information 35 in Bezug steht, und/oder ein Zustimmungswert eines jeweiligen Fahrzeughalters des Kraftfahrzeugs 2 und/oder für jedes Kraftfahrzeug aus der Vielzahl von Kraftfahrzeugen gespeichert. In diesem Fall kann das Kraftfahrzeug 2 zumindest teilweise anhand der Daten der Datenbank aus der Vielzahl von Kraftfahrzeugen ausgewählt werden.

Das vorbestimmte Auswahlkriterium zum Auswählen des Kraftfahrzeugs 2 aus der Vielzahl von Kraftfahrzeugen umfasst beispielsweise, dass das Kraftfahrzeug 2 zumindest teilweise aufgrund der Position des Kraftfahrzeugs 2 ausgewählt wird. Die Information 35, die durch die Informationsanfrage 34 angefragt wird, kann mit der Position des Kraftfahrzeugs 2 in Bezug stehen. Beispielsweise wird mit der Informationsanfrage 34 ein Temperaturwert für einen bestimmten Ort oder ein Livebild von einem bestimmten Ort als Information 35 angefragt. Vorzugsweise wird dann das Kraftfahrzeug 2 ausgewählt, dessen Position beschreibt, dass sich das Kraftfahrzeug 2 an dem vorbestimmten Ort befindet.

Mittels der Informationsanfrage 34 kann eine Information 35 angefragt werden, zu deren Bereitstellung eine Einrichtung in und/oder an dem Kraftfahrzeug 2 vorhanden sein muss. In diesem Fall kann das vorbestimmte Auswahlkriterium umfassen, dass das Kraftfahrzeug 2 zumindest teilweise anhand dessen ausgewählt wird, ob diese Einrichtung in und/oder an dem Kraftfahrzeug 2 vorhanden ist. Vorzugsweise umfasst das vorbestimmte Auswahlkriterium, dass das Kraftfahrzeug 2 anhand dessen ausgewählt wird, ob der Fahrzeughalter des Kraftfahrzeugs 2 eine permanente Zustimmung zum Bereitstellen der Information 35 gibt. In diesem Fall kann die Information 35 besonders schnell durch das Kraftfahrzeug 1 bereitgestellt werden, da eine weitere Interaktion des Fahrzeughalters zur Zustimmung nicht erforderlich ist.

Die Steuerungszentrale 1 umfasst vorliegend einen zweiten Kommunikationsteil 12, der dazu ausgebildet ist, das Steuersignal zum Steuern einer Erfassungseinrichtung 5 des ausgewählten Kraftfahrzeugs 2 an das ausgewählte Kraftfahrzeug 2 auszusenden. Durch das Steuersignal kann beispielsweise ein Erfassen der Information 35 durch die Erfassungseinrichtung 5 des Kraftfahrzeugs 2 gesteuert werden. Alternativ oder zusätzlich kann das bereitstellen und/oder Senden der Information 35 durch die Erfassungseinrichtung 5 des Kraftfahrzeugs 2 durch das Steuersignal gesteuert werden. Das Kraftfahrzeug 2 empfängt das Steuersignal vorzugsweise mittels einer Kommunikationseinheit 28. Vorzugsweise wird durch das Steuersignal der Fahrzeughalter nach seinem Einverständnis zum Erfassen und/oder Übertragen der Information 35 gefragt. Beispielsweise kann der Fahrzeughalter sein Einverständnis durch eine Eingabevorrichtung des Kraftfahrzeugs 2 bestätigen. Alternativ hat der Fahrzeughalter sein Einverständnis zum Übertragen und/oder Erfassen der Information 35 bereits, insbesondere pauschal, im Vorhinein gegeben. Beispielsweise wird auf das Steuersignal hin die Information 35 durch die Erfassungseinrichtung 5 des Kraftfahrzeugs 2 erfasst und mittels der Kommunikationseinrichtung 28 an die Steuerungszentrale 1 gesendet.

Die Steuerungszentrale 1 beziehungsweise der zweite Kommunikationsteil 12 ist insbesondere zur zumindest teilweise kabellosen Kommunikation mit der Kommunikationseinheit 28 des Kraftfahrzeugs 2 ausgebildet. Beispielsweise ist der zweite Kommunikationsteil 12 mittels einer drahtgestützten Verbindung 17 mit einer Funkeinrichtung 18, vorliegend ein Sendemast, verbunden. Zwischen der Funkeinrichtung 18 und der Kommunikationseinheit 28 des Kraftfahrzeugs 2 kann eine Funkverbindung, beispielsweise über Wifi oder eine mobile Datenverbindung über das Handynetz, zumindest vorübergehend bestehen. Beispielsweise wird das Steuersignal mittels eines ersten Funksignals 19 an das Kraftfahrzeug 2 beziehungsweise die Kommunikationseinrichtung 28 des Kraftfahrzeugs 2 gesendet. Die Information 35 kann mittels eines zweiten Funksignals 29 von der Kommunikationseinrichtung 28 an die Funkeinrichtung 18 beziehungsweise den zweiten Kommunikationsteil 12 beziehungsweise die Steuerungseinrichtung 1 gesendet werden. Insbesondere wird die Information 35 durch Empfangen des zweiten Funksignals 29 durch die Steuerungseinrichtung 1 ermittelt.

Das Kraftfahrzeug 2 weist vorliegend mehrere Erfassungseinrichtungen 5 auf. Beispielsweise umfasst das Kraftfahrzeug 2 ein Thermometer 20 als Erfassungseinrichtung 5. Mittels des Thermometers 20 kann ein Temperaturwert, insbesondere einer Umgebung des Kraftfahrzeugs 2, als Information 35 erfasst werden. Das Kraftfahrzeug 2 kann eine oder mehrere Kameras 22 als Erfassungseinrichtung 5 aufweisen. In diesem Fall kann beispielsweise ein Bild der Umgebung des Kraftfahrzeugs 2 als Information 35 erfasst werden. Beispielsweise können Verkehrsdaten durch einen Verkehrserfassungseinheit 23, zum Beispiel ein Tachometer, als Information 35 erfasst werden. Zum Beispiel kann eine Geschwindigkeit des Kraftfahrzeugs 2 auf einer vorbestimmten Straße als Information 35 erfasst werden. Durch Auswerten der Geschwindigkeit des Kraftfahrzeugs 2 kann dann auf eine Stausituation an der Position des Kraftfahrzeugs 2 geschlossen werden.

Vorzugsweise umfasst das Kraftfahrzeug 2 eine Positionierungseinrichtung 21, insbesondere ein GPS-Empfänger, als Erfassungseinrichtung 5. Vorzugsweise kann mittels der Positionierungseinrichtung 21 die Position des Kraftfahrzeugs 2 Teil der Information 35 sein. Vorzugsweise sendet das Kraftfahrzeug 2 mittels der Kommunikationseinrichtung 28 kontinuierlich, periodisch und/oder auf eine Positionsanfrage der Steuerungszentrale 1 hin seine Position an die Steuerungszentrale 1. Die Position des Kraftfahrzeugs 2 kann von der Steuerungszentrale 1 als Positionssignal und/oder als Information 35 empfangen werden.

Die Steuerungszentrale 1 kann eine Zähleinrichtung 14 umfassen. Beispielsweise umfasst die Zähleinrichtung 14 einen ersten Zähler 46, der der Anfrageeinheit 3 zugeordnet ist, einen zweiten Zähler 47, der dem Kraftfahrzeug 2 oder dem Fahrzeughalter des Kraftfahrzeugs 2 zugeordnet ist, und/oder einen Dritten Zähler 48, der der Steuerungseinrichtung 1 zugeordnet ist. Ein Zählerstand der jeweiligen Zähler 46, 47, 48 kann einen jeweiligen Guthabenstand charakterisieren. Insbesondere kann beim Erfassen und Bereitstellen der Information 35 der Zählerstand eines oder mehrerer der Zähler 46, 47, 48 um einen vorbestimmten Wert verändert werden. Der vorbestimmte Wert kann für jeden der Zähler 46, 47, 48 unterschiedlich sein. Beispielsweise kostet das Bereitstellen der Information 35 0,10 €. In diesem Fall kann der Zähler 46, der der Anfrageeinheit 3 zugeordnet ist, um den Wert 0,10 € herabgesetzt werden. Die Zählerstände der beiden anderen Zähler 47, 48 können nach einer vorbestimmten Verteilungsvorschrift um insgesamt 0,10 € erhöht werden. Beispielsweise wird der Zählerstand des Zählers 47 um den Wert 0,07 € und der Zählerstand des Zählers 48 um den Wert 0,03 € heraufgesetzt. Auf diese Weise können der Fahrzeughalter des Kraftfahrzeugs 2 und/oder ein Betreiber der Steuerungszentrale 1 für das Bereitstellen der Information 35 vergütet werden. Alternativ oder zusätzlich kann das Vergüten durch eine externe Buchungseinrichtung 4 erfolgen. Die Buchungseinrichtung 4 umfasst ein erstes Konto 41, das der Anfrageeinheit 3 zugeordnet ist, ein zweites Konto 42, das dem Kraftfahrzeug 2 beziehungsweise dem Fahrzeughalter des Kraftfahrzeugs 2 zugeordnet ist, und ein drittes Konto 43 das der Steuerungszentrale 1 zugeordnet ist. In diesem Fall kann die Steuerungszentrale 1 ein Vergütungssignal zum Verknüpfen der Konten 41, 42, 43 aussenden. Durch Verknüpfen der Konten 41, 42, 43 kann eine Vergütung nach dem oben genannten Vergütungsmodell erfolgen.

Die Information 35 kann, nachdem sie durch die Steuerungseinrichtung 1 beziehungsweise den zweiten Kommunikationsteil 12 empfangen wurde, durch die Steuerungszentrale 1 beziehungsweise den ersten Kommunikationsteil 13 an die Anfrageeinheit 3 gesendet werden. Insbesondere wird die Information 35 in Form eines Datensignals an die Anfrageeinheit 3 gesendet.

Demnach dient der erste Kommunikationsteil 13 insbesondere der Kommunikation der Steuerungszentrale 1 mit der Anfrageeinheit 3 und der zweite Kommunikationsteil 12 der Kommunikation der Steuerungszentrale 1 mit dem Kraftfahrzeug 2. Die Vielzahl an Kraftfahrzeugen kann sich in einem Onlineverbund befinden, der durch die Steuerungszentrale 1 verwaltet wird. Jedes Kraftfahrzeug der Vielzahl von Kraftfahrzeugen kann in diesem Onlineverbund beziehungsweise in der Steuerungszentrale 1 registriert sein beziehungsweise ein Fahrzeugkonto aufweisen. Die Fahrzeuge stehen insbesondere in ständigem Kontakt mit der Steuerungszentrale 1, insbesondere um Status, Position und weitere Zustandsdaten zu übermitteln. Mittels der Anfrageeinheit 3 kann ein externer Nutzer auf den Onlineverbund beziehungsweise auf die Steuerungszentrale 1 zugreifen und/oder die Informationsanfrage 34 stellen. Kann die mittels der Informationsanfrage 34 angeforderte Information durch die Steuerungszentrale beziehungsweise eines Kraftfahrzeugs aus der Vielzahl von Kraftfahrzeugen bereitgestellt werden, so kann hierfür eine Vergütung vorgesehen sein. Die Steuerungszentrale 1 dient somit einerseits der Interaktion mit der Anfrageeinheit 3 als auch der Interaktion mit dem Kraftfahrzeug 2. Insbesondere ist für das Kraftfahrzeug 2 und/oder die Anfrageeinheit 3 das Konto 41, 42 bei der Buchungseinrichtung 4 hinterlegt. Insbesondere ist die Buchungseinrichtung 4 Teil einer Kryptowährung. Insbesondere handelt es sich bei den Konten 41, 42, 43 um Konten in einer Kryptowährung, beispielsweise Bitcoin.

## Patentansprüche

1. Verfahren zum Bereitstellen einer Information mittels eines Kraftfahrzeugs (2), mit den Schritten:
- Empfangen einer Informationsanfrage (34) durch eine fahrzeugexterne Steuerungszentrale (1), welche einen Server umfasst, aus einer Anfrageeinheit (3), welche als von der Steuerungszentrale (1) entfernter weiterer Server, als Personalcomputer oder als mobiles Endgerät ausgeführt ist,
- für eine Vielzahl von Kraftfahrzeugen: Empfangen einer jeweiligen Position der Kraftfahrzeuge kontinuierlich, periodisch und/oder auf eine Positionsanfrage der Steuerungszentrale (1) hin durch die Steuerungszentrale (1),
- Auswählen eines Kraftfahrzeugs (2) aus der Vielzahl von Kraftfahrzeugen (2) nach einem vorbestimmten Auswahlkriterium, wobei das Auswahlkriterium umfasst, dass das Kraftfahrzeug (2) aufgrund der Position des Kraftfahrzeugs (2) ausgewählt wird,
- Aussenden eines Steuersignals zum Steuern einer Erfassungseinrichtung (5) des ausgewählten Kraftfahrzeugs (2) durch die Steuerungszentrale (1) an das ausgewählte Kraftfahrzeug (2),
- Empfangen einer aufgrund des Steuersignals erfassten Information (35) aus der Erfassungseinrichtung (5) des ausgewählten Kraftfahrzeugs (2),
- Übermitteln der Information (35) durch die Steuerungszentrale (1) an die Anfrageeinheit (3),
- wobei als die Information (35) Umweltdaten erfasst werden, wobei die Umweltdaten eine Temperatur als eine Messgröße einer Umgebung des Kraftfahrzeugs umfassen.

2. Verfahren nach Anspruch 1,
**dadurch gekennzeichnet, dass**
das Auswahlkriterium umfasst, dass das Kraftfahrzeug (2) aufgrund einer Zustimmung eines Fahrzeughalters des Kraftfahrzeugs (2) zum Bereitstellen der Information (35) und/oder aufgrund des Vorhandenseins einer mit der Information (35) in Bezug stehenden Einrichtung in und/oder an dem Kraftfahrzeug (2) ausgewählt wird.

3. Verfahren nach einem der vorhergehenden Ansprüche,
**dadurch gekennzeichnet, dass**
beim Bereitstellen der Information (35) ein mit dem Kraftfahrzeug (2) in Bezug stehender Zähler (46, 47, 48) der Steuerungszentrale (1) um einen vordefinierten Wert verändert wird.

4. Verfahren nach einem der vorhergehenden Ansprüche,
**dadurch gekennzeichnet, dass**
mit dem Anfragen und/oder dem Bereitstellen der Information (35) eine Buchungseinrichtung (4) der Anfrageeinheit (3) mit einer Buchungseinrichtung (4) des Kraftfahrzeugs (2) für einen Vergütungsvorgang gekoppelt wird.

5. Verfahren nach einem der vorhergehenden Ansprüche,
**dadurch gekennzeichnet, dass**
durch das Steuersignal zumindest ein Sensor der Erfassungseinrichtung (5) des Kraftfahrzeugs (2) zum Erfassen der Information gesteuert wird.

6. Verfahren nach einem der vorhergehenden Ansprüche,
**dadurch gekennzeichnet, dass**
als die Information (35) zusätzlich Verkehrsdaten und/oder Routendaten erfasst werden.

7. Verfahren nach einem der vorhergehenden Ansprüche,
**dadurch gekennzeichnet, dass**
durch das Steuersignal der Fahrzeughalter nach seinem Einverständnis zum Erfassen und/oder Übertragen der Information (35) gefragt wird.

8. Fahrzeugexterne Steuerungszentrale (1), welche einen Server umfasst, zum Bereitstellen einer Information (35) mittels eines Kraftfahrzeugs (2), mit
- einem ersten Kommunikationsteil (13) zum Empfangen einer Informationsanfrage (34) aus einer Anfrageeinheit (3) und zum Übermitteln der Information an die Anfrageeinheit (3), wobei die Anfrageeinheit (3) als von der Steuerungszentrale (1) entfernter weiterer Server, als Personalcomputer oder als mobiles Endgerät ausgeführt ist,
- einem Rechenteil (11) zum Auswählen des Kraftfahrzeugs (2) aus einer Vielzahl von Kraftfahrzeugen (2) nach einem vorbestimmten Auswahlkriterium, wobei das Auswahlkriterium umfasst, dass das Kraftfahrzeug (2) aufgrund einer Position des Kraftfahrzeugs (2) ausgewählt wird, und
- einem zweiten Kommunikationsteil (12) zum Aussenden eines Steuersignals zum Steuern einer Erfassungseinrichtung (5) des ausgewählten Kraftfahrzeugs (2) an das ausgewählte Kraftfahrzeug (2) und zum Empfangen der aufgrund des Steuersignals erfassten Information (35) aus der Erfassungseinrichtung (5) des ausgewählten Kraftfahrzeugs (2), wobei die Steuerungszentrale (1) dazu ausgebildet ist, für die Vielzahl von Kraftfahrzeugen eine jeweilige Position der Kraftfahrzeuge kontinuierlich, periodisch und/oder auf eine Positionsanfrage der Steuerungszentrale (1) hin zu empfangen,
- wobei die Information (35) Umweltdaten betrifft, wobei die Umweltdaten eine Temperatur als eine Messgröße einer Umgebung des Kraftfahrzeugs umfassen.

## Claims

1. Method for providing an item of information by means of a motor vehicle (2), having the steps:
- receiving a request for information (34) via a control centre (1) external to the vehicle, which comprises a server, from a request unit (3), which is carried out in the form of a further server remote from the control centre (1), a personal computer or a mobile end device,
- for a plurality of motor vehicles: receiving via the control centre (1) a respective position of the motor vehicles continuously, periodically and/or in response to a position request from the control centre (1),
- selecting a motor vehicle (2) from the plurality of motor vehicles (2) according to a predetermined selection criterion, wherein the selection criterion comprises that the motor vehicle (2) is selected on the basis of the position of the motor vehicle (2),
- sending a control signal for controlling a detection device (5) of the selected motor vehicle (2) via the control centre (1) to the selected motor vehicle (2),
- receiving from the detection device (5) of the selected motor vehicle (2) an item of information (35) detected on the basis of the control signal,
- transmitting the item of information (35) via the control centre (1) to the request unit (3),
- wherein environmental data are detected as the item of information (35), wherein the environmental data comprise a temperature as a measurement parameter of an environment of the motor vehicle.

2. Method according to claim 1,
**characterised in that**
the selection criterion comprises that the motor vehicle (2) is selected on the basis of an agreement of a vehicle owner of the motor vehicle (2) to provide the item of information (35) and/or on the basis of the presence of a device, in and/or on the motor vehicle (2), related to the item of information (35).

3. Method according to any of the preceding claims,
**characterised in that**
at the provision of the item of information (35) a meter (46, 47, 48) of the control centre (1), being in relation to the motor vehicle (2), is altered by a predefined value.

4. Method according to any of the preceding claims,
**characterised in that**
with the requesting and/or the provision of the item of information (35) an accounting device (4) of the request unit (3) is coupled with an accounting device (4) of the motor vehicle (2) for a compensation procedure.

5. Method according to any of the preceding claims,
**characterised in that**
by means of the control signal at least one sensor of the detection device (5) of the motor vehicle (2) is controlled to detect the item of information.

6. Method according to any of the preceding claims,
**characterised in that**
traffic data and/or route data are additionally detected as the item of information (35).

7. Method according to any of the preceding claims,
**characterised in that**
by means of the control signal the vehicle owner is asked for his permission to detect and/or transmit the item of information (35).

8. Control centre (1) external to the vehicle, which comprises a server, for providing an item of information (35) by means of a motor vehicle (2), having
- a first communication part (13) for receiving a request for information (34) from a request unit (3) and for transmitting the item of information to the request unit (3), wherein the request unit (3) is carried out in the form of a further server remote from the control centre (1), a personal computer or a mobile end device,
- a computing part (11) for selecting the motor vehicle (2) from a plurality of motor vehicles (2) according to a predetermined selection criterion, wherein the selection criterion comprises that the motor vehicle (2) is selected on the basis of a position of the motor vehicle (2), and
- a second communication part (12) for sending a control signal for controlling a detection device (5) of the selected motor vehicle (2) to the selected motor vehicle (2) and for receiving the item of information (35), detected on the basis of the control signal, from the detection device (5) of the selected motor vehicle (2), wherein the control centre (1) is configured to receive for the plurality of motor vehicles a respective position of the motor vehicles continuously, periodically and/or in response to a position request from the control centre (1),
- wherein the item of information (35) concerns environmental data, wherein the environmental data comprise a temperature as a measurement parameter of an environment of the motor vehicle.

## Revendications

1. Procédé pour fournir une information au moyen d'un véhicule automobile (2), présentant les étapes consistant à :
- recevoir une demande d'information (34) par un centre de commande (1) extérieur à un véhicule, lequel comprend un serveur, à partir d'une unité de demande (3), laquelle est mise en oeuvre sous la forme d'un serveur distant du centre de commande (1), sous la forme d'un ordinateur personnel ou sous la forme d'un terminal mobile,
- pour une pluralité de véhicules automobiles : recevoir une position respective des véhicules automobiles de manière continue, périodique et/ou suite à une demande de position du centre de commande (1), par l'intermédiaire du centre de commande (1),
- sélectionner un véhicule automobile (2) parmi la pluralité de véhicules automobiles (2) selon un critère de sélection prédéterminé, dans lequel le critère de sélection comprend que le véhicule automobile (2) est sélectionné en raison de la position du véhicule automobile (2),
- envoyer un signal de commande au véhicule automobile sélectionné (2) par l'intermédiaire du centre de commande (1) pour commander un dispositif de détection (5) du véhicule automobile sélectionné (2),
- recevoir une information (35) détectée en raison du signal de commande provenant du dispositif de détection (5) du véhicule automobile sélectionné (2),
- transmettre l'information (35) à l'unité de demande (3) par l'intermédiaire du centre de commande (1),
- dans lequel des données environnementales sont détectées en tant qu'information (35), dans lequel les données environnementales comprennent une température en tant que valeur de mesure d'un environnement du véhicule automobile.

2. Procédé selon la revendication 1,
**caractérisé en ce que**
le critère de sélection comprend que le véhicule automobile (2) est sélectionné pour fournir l'information (35) en raison d'un accord d'un propriétaire du véhicule automobile (2), et/ou en raison de la présence d'un dispositif associé à l'information (35) dans et/ou sur le véhicule automobile (2).

3. Procédé selon l'une quelconque des revendications précédentes,
**caractérisé en ce que**
un compteur (46, 47, 48) associé du centre de commande (1) est modifié à une valeur prédéfinie pour fournir l'information (35) concernant le véhicule automobile (2).

4. Procédé selon l'une quelconque des revendications précédentes,
**caractérisé en ce que**
un dispositif de réservation (4) de l'unité de demande (3) est couplé à un dispositif de réservation (4) du véhicule automobile (2) pour un processus de rémunération, avec les demandes et/ou les fournitures de l'information (35).

5. Procédé selon l'une quelconque des revendications précédentes,
**caractérisé en ce que**
au moins un capteur du dispositif de détection (5) du véhicule automobile (2) destiné à détecter l'information est commandé par le signal de commande.

6. Procédé selon l'une quelconque des revendications précédentes,
**caractérisé en ce que**
des données de trafic et/ou des données de route sont en outre détectées en tant qu'information (35).

7. Procédé selon l'une quelconque des revendications précédentes,
**caractérisé en ce que**
le propriétaire de véhicule est interrogé par le signal de commande concernant son accord pour détecter et/ou transmettre l'information (35).

8. Centre de commande (1) externe à un véhicule, lequel comprend un serveur, pour fournir une information (35) au moyen d'un véhicule automobile (2), avec
- une première partie de communication (13) destinée à recevoir une demande d'information (34) à partir d'une unité de demande (3) et à transmettre l'information à l'unité de demande (3), dans lequel l'unité de demande (3) est mise en oeuvre sous la forme d'un serveur supplémentaire distant du centre de commande (1), sous la forme d'un ordinateur personnel ou sous la forme d'un terminal mobile,
- une partie de calcul (11) pour sélectionner le véhicule automobile (2) parmi une pluralité de véhicules automobiles (2) selon un critère de sélection prédéterminé, dans lequel le critère de sélection comprend que le véhicule automobile (2) est sélectionné en raison d'une position du véhicule automobile (2), et
- une seconde partie de communication (12) destinée à envoyer un signal de commande pour commander un dispositif de détection (5) du véhicule automobile sélectionné (2) sur le véhicule automobile sélectionné (2) et pour recevoir l'information (35) détectée en raison du signal de commande provenant du dispositif de détection (5) du véhicule automobile sélectionné (2), dans lequel le centre de commande (1) est conçu pour recevoir une position respective des véhicules automobiles pour la pluralité de véhicules automobiles de manière continue, périodique et/ou suite à une demande de position du centre de commande (1),
- dans lequel l'information (35) concerne des données environnementales, dans lequel les données environnementales comprennent une température en tant que valeur de mesure d'un environnement du véhicule automobile.
